# EUROPEAN PATENT SPECIFICATION

(11) **EP 1 511 326 B1**
(45) Date of publication and mention of the grant of the patent: **04.04.2012**
(21) Application number: 04012768.0
(22) Date of filing: 28.05.2004
(51) Int. Cl.: H04N 21/00

(54) **Apparatus and method for multimedia reproduction using output buffering in a mobile communication terminal**
Vorrichtung und Verfahren zur Wiedergabe von Multimedia mit Ausgangspuffer auf einem mobilen Kommunikationsendgerät
Procédure et système pour la reproduction de multimedia avec tampon de sortie à un terminal de communication mobile

(30) Priority: 26.08.2003 KR 2003059037
(43) Date of publication of application: 02.03.2005
(73) Proprietor: SAMSUNG ELECTRONICS CO., LTD., Suwon-si, Gyeonggi-do (KR)
(72) Inventor: Lee, Seung-Cheol, Yeongtong-gu Suwon-si Gyeonggi-do (KR); Lee, Hyo-Soon, Yeongtong-gu Suwon-si Gyeonggi-do (KR); Lee, Sang-Beom, Yeongtong-gu Suwon-si Gyeonggi-do (KR); Kim, Hyun-Sool, Yeongtong-gu Suwon-si Gyeonggi-do (KR)
(74) Representative: Grünecker, Kinkeldey, Stockmair & Schwanhäusser

(56) References cited:
- EP-A- 1 193 981
- US-A1- 2002 001 351
- US-A1- 2002 012 398
- US-A1- 2002 101 933

## Description

The present invention relates to a multimedia reproduction apparatus in a mobile communication terminal.

In progressing toward a highly information-oriented society, information and communication is increasing its importance as a society infrastructure, and communication service is moving the center of importance from the conventional wire communication to wireless communication, which attaches importance to mobility. Additionally, a new market, which is called wireless internet, combining internet and mobile communication is progressing at a rapid speed.

As described above, with the great increase of users' dependency on information and communication, and the improvement of wireless communication technologies, a first-generation analog system has changed into a second-generation digital system, and now a third-generation mobile communication (IMT-2000) centered on data communication is being developed.

Such a third-generation mobile communication system provides not only voice but also broadband multimedia service such as a video conference, Internet services, etc. In addition, the third generation system provides a data service up to 2Mbps maximum in an office environment, thereby providing a true wireless multimedia service.

In order to achieve a multimedia service in a third-generation mobile communication system, transmission and reception are performed in a type of MPEG-4. MPEG-4 is a standard technology which reduces the size of a multimedia file to enable a two-way video service to be provided to a computer, a mobile communication terminal, a TV set-top box, etc, at a higher speed, and can be applied to all kinds of multimedia images such as a general broadcasting, Internet broadcasting, a movie, and a game including images for mobile communication terminals of 2.5 and 3rd generations.

In the above-mentioned third-generation mobile communication terminal, the reproduction function of multimedia data is a necessity. However, a multimedia service has characteristics that the quantity of data is large and many calculations are required. In addition, because a variety of specifications exist, such as 3rd Generation Partnership Project (3GPP), 3rd Generation Partnership Project 2 (3GPP2), Korea 3 Generation (K3G), Real-time Transport Protocol (RTP), different decoders according to the respective specifications are required. Particularly, video data is processed at low speed and has large differences in quantity of bits among frames. Therefore, in order to decode video data, a multimedia service requires at least two or three times longer processing capacity than that of a specified requirement (that is, an average processing time for frames) so that momentarily increased frames (for example, an intra-frame) can be processed.

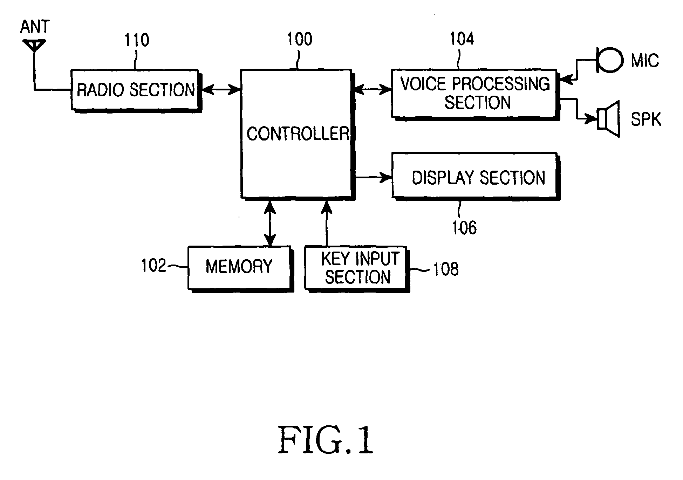

FIG. 1 is a block diagram illustrating an example of a conventional mobile communication terminal. In the mobile communication terminal illustrated in FIG. 1, a controller 100 processes and controls a variety of functions including a short message service (SMS), as well as telephone calls and wireless internet connections. The mobile communication terminal includes a multimedia reproduction apparatus, which performs a multimedia reproduction operation in the present invention.

A memory 102 includes a Read Only Memory (ROM) in which micro codes of programs for process and control of the controller 100 and a variety of reference data is stored, a Random Access Memory (RAM) to be provided as a working memory for the controller 100, and a flash RAM to provide an area for storing a variety of updatable storage data including multimedia data. A voice processing section 104, which is connected with the controller 100, processes a telephone call, a voice recording, an incoming alarm output, etc., through a microphone and a speaker. A display section 106 displays received data and information required to be currently displayed.

More specifically, in the present invention, the voice processing section 104 and the display section 106 perform a video processing and a voice processing for reproducing multimedia data. A key input section 108 includes number keys of '0' to '9' and a plurality of function keys including 'menu', 'send', 'deletion', 'end', '*', '#', and 'volume', and provides key input data corresponding to a key pressed by a user to the controller 100. A radio section 110 transmits and receives a radio signal to/from a Base Transceiver Station (BTS) through an antenna.

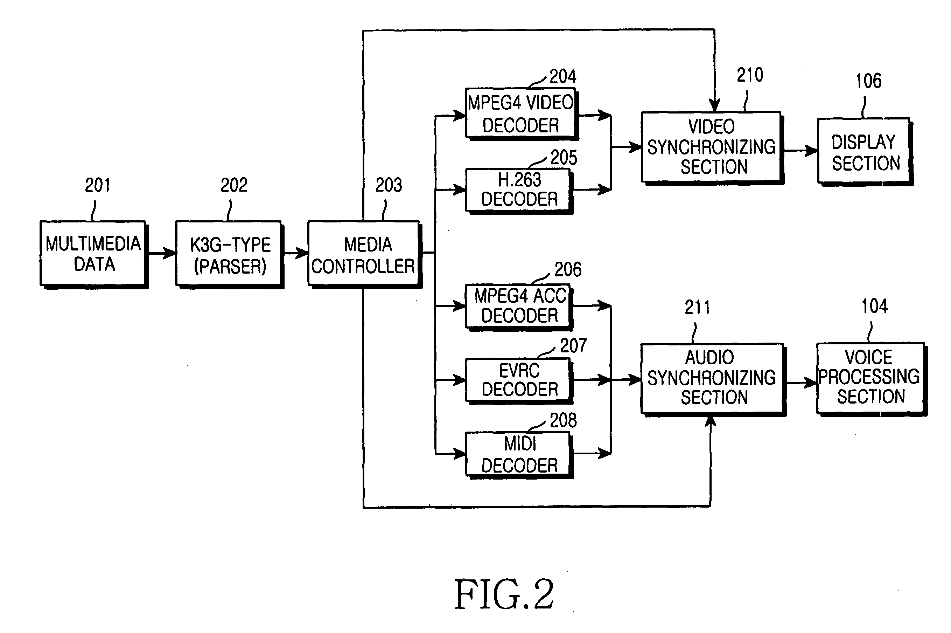

FIG. 2 illustrates an embodiment of a multimedia reproduction apparatus in a conventional mobile communication terminal. Herein, while a K3G-type multimedia reproduction apparatus is exampled, the description is identically applied to other multimedia reproduction apparatuses that decode multimedia data of other formats, such as 3GPP, 3GPP2, and so forth.

Referring to FIG. 2, a multimedia reproduction apparatus of a mobile communication terminal comprises: a K3G-type parser 202 for parsing the header file of multimedia data 201 into K3G format; a media controller 203 for dividing the parsed information into video data and audio data, transmitting the divided data with corresponding control information to decoders, and outputting a synchronizing signal to synchronize the video data and the audio data to each other; an MPEG4 (Moving Picture Experts Group 4) video decoder 204 and an H.263 decoder 205 for decoding the video data; an MPEG4 AAC (Advanced Audio Coding) decoder 206; an EVRC (Enhanced Variable Rate Coding) decoder 207; a MIDI decoder 208 for decoding the audio data; a video synchronizing section 210 for outputting decoded video information according to a synchronizing signal of the media controller 203 so that the decoded video information is output in synchronization with audio information; and an audio synchronizing section 211 for outputting decoded audio information according to a synchronizing signal of the media controller 203 so that the decoded audio information is output in synchronization with video information.

With the multimedia output of a mobile communication terminal using such a multimedia reproduction apparatus, because respective media data requires different decoding times from each other, a method for synchronizing themand a method for providing an optimized output critical time are becoming important issues. Particularly, determining an output critical time in consideration of decoding time difference between video data and audio data is an important subject from the viewpoint of efficient use of the resources in a mobile communication terminal which does not have many resources.

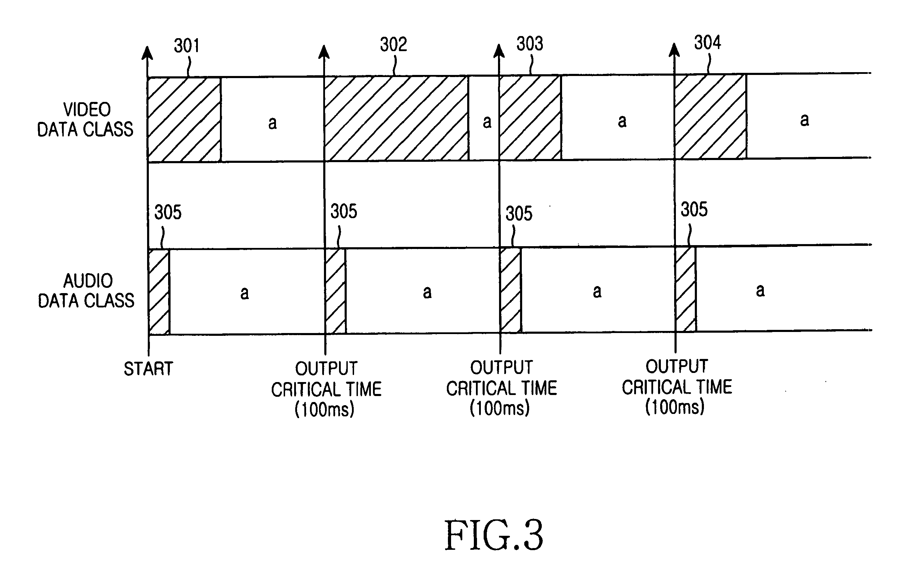

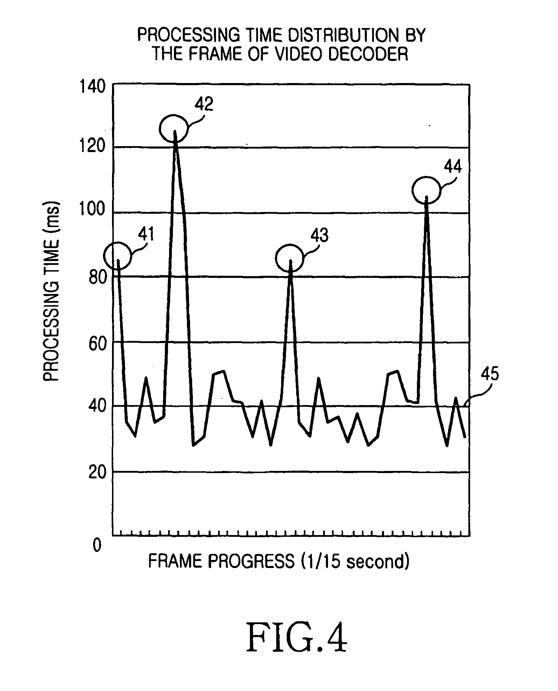

First, a relationship between processing times for each frame and an output critical time will be described with reference to FIGs. 3 and 4. In general, because the decoding time of an audio frame is much shorter than that of a video frame, it is sufficient to consider the decoding process of only a video frame. Therefore, the following description will be focused on the process of video frames.

FIG. 3 illustrates decoding timing for each class when an output critical time is set to 100ms, and FIG. 4 illustrates the distribution of times required for video decoding process according to video frames. Referring to FIG. 3 illustrating decoding times for each frame, video data can be classified into intra-frames 302 needing the whole screen to be decoded and inter-frames 301, 303, and 304 needing a changed part of screen to be decoded. It should be noted that audio frames have much shorter decoding times than those of the video frames. Also, the output critical time of 100ms that the occupancy times of the inter-frames and the audio frames are short, while the occupancy times of the intra-frames generated once every 10 frames on the average are long. Therefore, in a mobile communication terminal having limited resources, it is necessary to efficiently reduce the waiting times designated by 'a' in FIG. 3.

Referring to FIG. 4, in general, differences of processing times among frames are about 20ms. However, at scene-changing parts designated by 41, 42, 43, and 44, the quantities of bits for corresponding frames are greatly increased in a moment, and thereby their decoding times also are greatly increased. Such a frame is called intra-frame, and shows that differences among frame processing times are about 60~100ms. Therefore, in order to process all frames, it is necessary to set the output critical time to about 100ms, which is the maximum decoding time. That is, while the average decoding time for each frame in FIG 4 is no more than 46ms, the output critical time must be set as 100ms or more in order to process intra-frames having processing time differences of about 60~100ms. As illustrated in FIG. 4, the intra-frame is not continuous and has a characteristic that flat section is continuous for a considerable period after a momentary peak. In such a flat section, decoding time is 20ms or so. With the relation between the peak and the flat section, it is considered that one peak (one intra-frame) occurs about every 10 frames. Therefore, when the output critical time is set for the intra-frame occurring once every 10 frames on the average, unnecessary consumption of resources is increased in process of the other frames. Accordingly, a solution capable of efficiently utilizing the resources is required.

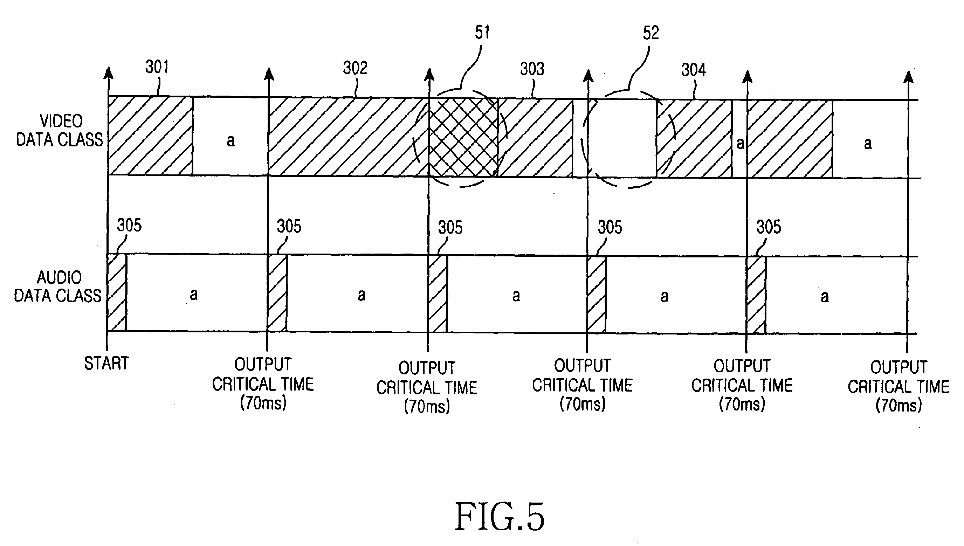

FIG. 5 illustrates decoding timings for each class in a case in which the output critical time is set to 70ms. According to FIG. 5, it is known that the waiting time 'a' is remarkably reduced as compared to FIG. 3 because the output critical time is set as 70ms. However, with a section 302 in which an intra-frame is processed, because the output critical time is short, the intra-frame is decoded over the critical time as indicated by a reference number 51, so that there may be only an audio output without a video output. Also, the synchronization between video and audio can be failed as indicated by a reference number 52.

As described above, in the case of reducing the waiting time by a method of reducing the output critical time so as to efficiently utilize limited resources of a mobile communication terminal, quality of service (QOS), which is one of the most important factors in multimedia reproduction, is not satisfied. Therefore, research into a method for enabling the resources to be efficiently utilized is required in multimedia data reproduction of a mobile communication terminal.

US 2002/012398 A1 relates to a digital still camera system and method. An architecture of a digital still camera is provided, wherein the digital still camera includes capabilities of playback of audio and video and synchronizes with a circular buffer for video frames. A digital still camera engine also has the capability to support capturing of a rapid sequence of images in a "burst mode" of operation. Bursts at up to 10 frames/sec of two Megapixel images will be supported. The duration of the burst sequence is only limited by the size of an SDRAM of the digital still camera system. Also, MPEG compression may be used for short clips. And capabilities of playback of audio-video include circular buffering. A programmable DSP allows easy inclusion of a modem and/or a TCP/IP interface for direct connection to the internet. The digital still camera may run complex multi-tasking operating systems to schedule real-time tasks. A platform is provided for programmable camera functions, dual processors (ARM and DSP) plus an image co-processor, burst mode compression/decompression engine, programmable preview engine, and integration of all camera variables. Further, the platforms can provide both camera functions and digital audio playback on the same integrated circuit. The digital still camera also provides the ability for the user to view the captured images on LCD screen on the camera or on an external TV monitor. Since the captured images are stored in SDRAM (or on compact flash memory) as JPEG bitstreams, playback mode software is also provided on the DSP. This playback mode software decodes the JPEG bit stream, scales the decoded image to the appropriate special resolution, and displays it on the LCD screen and/or the external TV monitor.

US 2003/0128294 A1 describes a method and apparatus for synchronizing audio and video data. A system receives a transport stream containing video data and audio data. A determination is made regarding the time required to process the video data contained in the transport stream and the time required to process the audio data contained in the transport stream. The system then determines a difference in time to process the video contained in the transport stream as compared to the audio data contained in the transport stream. Presentation of the audio data is delayed by this difference in time to synchronize presentation of the audio data with presentation of the video data.

Accordingly, the present invention has been designed to solve the above and other problems occurring in the prior art.

It is the object of the present invention to provide an improved method and apparatus for optimizing multimedia reproduction for a mobile communication terminal.

This object is solved by the subject matter of the independent claims.

Preferred embodiments are defined in the dependent claims.

An aspect of the present invention is to provide an apparatus and a method for multimedia reproduction supporting quality of service in data service of a mobile communication terminal.

In order to accomplish the above, there is provided a multimedia reproduction apparatus using output buffering in a mobile communication terminal. The apparatus comprises: a data parsing section for dividing multimedia data into video data and other data and then parsing the video data and the other data; a video data processing section for decoding the parsed video data, which are transmitted from the data parsing section, by the frame, and for buffering a predetermined number of video frames of the decoded data; a media delay output controller for delaying the other data parsed by and transmitted from the data parsing section according to buffering information of the video data processing section, for outputting the delayed data, and for generating a synchronizing signal; an audio data processing section for decoding and outputting audio data from among the other data output from the media delay output controller; a video data output section for reading and outputting the video data, which are buffered by the video data processing section, by the frame using control data from among the other data output from the media delay output controller; and a synchronizing section for synchronizing and outputting the video data output from the video data output section and the audio data output from the audio data processing section according to a synchronizing signal of the media delay output controller.

In accordance with another aspect of the present invention, there is provided a control method using output buffering so as to reproduce multimedia data in a mobile communication terminal. The control method comprises the steps of: (1) the mobile communication terminal receiving the multimedia data, dividing multimedia data into video data and other data, and parsing the video data and the other data respectively; (2) storing video frame start addresses of video data parsed in step (1), decoding the video data by the frame, and buffering a predetermined number of video frames; (3) outputting the other data parsed in step (1) after delaying the other data as long as the predetermined number of video frames buffered in step (2); (4) decoding and outputting audio data by the frame in which the audio data are included in data output in step (3), and outputting video frames buffered in step (2) according to control information included in data output in step (3); and (5) synchronizing and outputting video frames and audio frames output in step (4) according to time information.

The above features and advantages of the present invention will be more apparent from the following detailed description taken in conjunction with the accompanying drawings, in which:
FIG. 1 is a block diagram illustrating an example of a general mobile communication terminal;
FIG. 2 illustrates an embodiment of a multimedia reproduction apparatus in a conventional mobile communication terminal;
FIG. 3 illustrates decoding timing for each class in a case in which the output critical time is set to 100ms;
FIG. 4 illustrates the distribution of times required for video decoding process according to video frames;
FIG. 5 illustrates decoding timing for each class in a case in which the output critical time is set to 70ms;
FIG. 6 illustrates a multimedia reproduction apparatus in a mobile communication terminal according to an embodiment of the present invention;
FIG. 7 illustrates distribution of times required for video decoding process according to buffering capacities for video frames; and
FIG. 8 illustrates reproduction of multimedia data in a mobile communication terminal according to an embodiment of the present invention.

An apparatus and a method for multimedia reproduction using output buffering in a mobile communication terminal according to preferred embodiments of the present invention will be described in detail herein below with reference to the accompanying drawings. It is to be noted that the same elements are indicated with the same reference numerals throughout the drawings. Additionally, in the following description of the present invention, a detailed description of known functions and configurations incorporated herein will be omitted when it may make the subject matter of the present invention rather unclear.

The present invention, which has been designed to solve the problems occurring in the prior art, efficiently utilizes limited resources in a mobile communication terminal and uses output buffering for video output so as to guarantee the quality of service in a multimedia service.

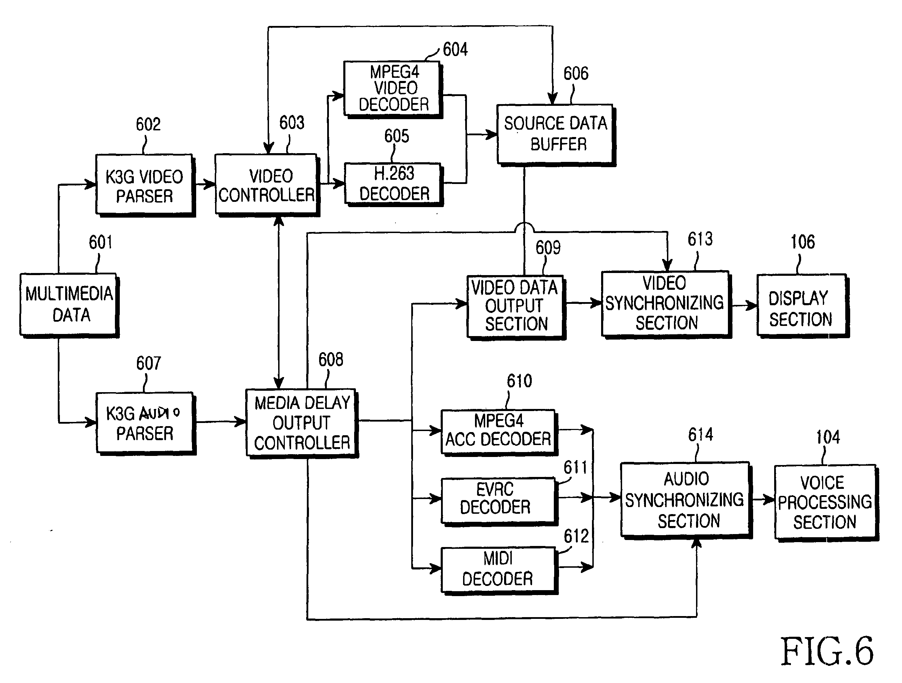

FIG. 6 illustrates a multimedia reproduction apparatus in a mobile communication terminal according to an embodiment of the present invention. Herein, while a K3G-type multimedia reproduction apparatus is exampled, the description is identically applied to other multimedia reproduction apparatuses, which decode multimedia data of other formats, such as 3GPP, 3GPP2, and so forth.

As illustrated in FIG. 6, a multimedia reproduction apparatus of a mobile communication terminal according to the present invention divides multimedia data 601 into a video part and the remaining multimedia part, and decodes the divided parts separately. That is, a multimedia reproduction apparatus of a mobile communication terminal according to the present invention comprises: a video module including a K3G-type video parser 602, a video controller 603, an MPEG4 video decoder 604, an H.263 decoder 605, a source data buffer 606, and a video data output section 609; the remaining multimedia module including a K3G-type parser 607, a media delay output controller 608, an MPEG4 Advanced Audio Coding (AAC) decoder 610, an Enhanced Variable Rate Coding (EVRC) decoder 611, and a MIDI decoder 612; and an output synchronizing module including a video synchronizing section 613 and an audio synchronizing section 614.

First, the multimedia data 601 is divided into different parts which are decoded in different ways according to the type of data by the K3G-type video parser 602 for parsing K3G video-type data and the K3G-type parser 607 for parsing the remaining multimedia information (mainly, audio data) with the exception of the video-type data.

The video controller 603 receives the parsed video data, and inputs the received data into the MPEG4 video decoder 604 and the H.263 decoder 605 according to frames. At this time, the video controller 603 determines the input operation according to buffering information of the source data buffer 606. Also, multiple frames of audio data, not one frame of audio data, are decoded and output per one frame of video data, so the video controller 603 provides video frame input information to the media delay output controller 608 so that video is synchronized with audio. The MPEG4 video decoder 604 and the H.263 decoder 605 decode video data.

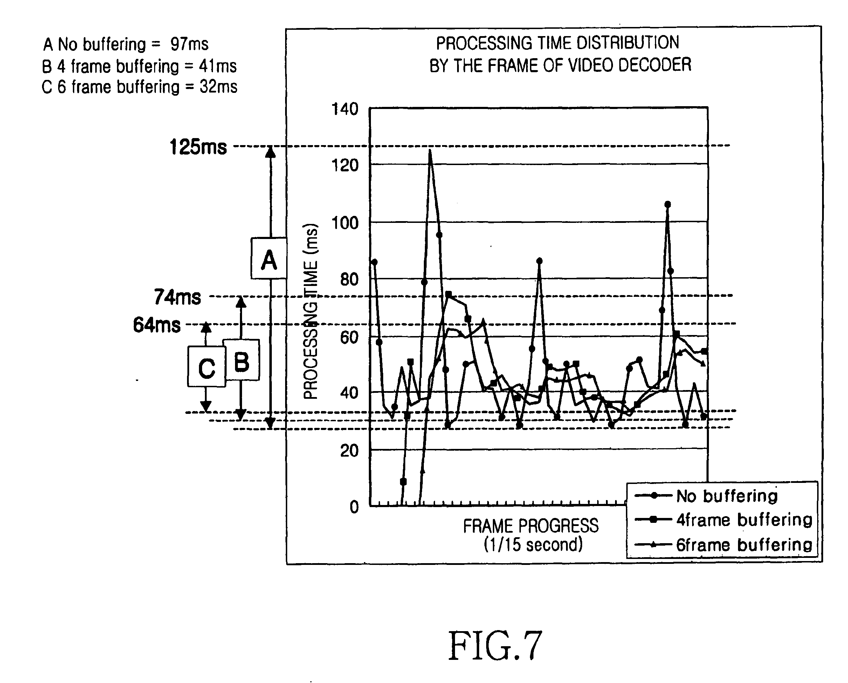

The source data buffer 606 buffers a pre-defined number of frames of the video data having been decoded by the MPEG4 video decoder 604 and the H.263 decoder 605, and outputs the video data by the frame according to a control signal of the video data control section 609. As described above, a multimedia reproduction apparatus according to the present invention performs a buffering operation for a pre-defined frame period before an output operation, unlike the conventional apparatus, which outputs data the moment the data is decoded. Therefore, it is possible to reduce the output critical time using the point that the average decoding time is constant even when decoding times for respective frames are different from each other. That is, an average decoding time for frames is output using a characteristic that the intra frame requiring a relatively long decoding time exists only once every ten frames and is not continued, so that it is possible to reduce the output critical time which have been set as a large value because of one intra-frame. This process is described with a distribution view of times required for video decoding process according to buffering capacities for video frames in which the distribution view is shown in FIG. 7.

FIG. 7 illustrates distribution of times required for video decoding process according to buffering capacities for video frames. Referring to FIG. 7, with no buffering 'A', because differences among decoding times for respective frames reaches up to 97ms maximum, the output critical time must be set as 100ms corresponding to the differences. However, with 4 frame buffering, the average decoding time is 41ms and output time from the buffer also has the same value. Therefore, it is possible to reduce the output critical time to 50ms. Also, with 6 frame buffering, the average decoding time is 38ms and output time from the buffer has the same value. Therefore, it is possible to reduce the output critical time below 50ms.

The K3G-type parser 607 parses control data and multimedia data excluding video data, and the media delay output controller 608 outputs a time-synchronizing signal to synchronize output of video data and audio data. The media delay output controller 608 inputs control data and multimedia data excluding video data by the frame according to a control signal of the video controller 603. In this case, the control data and multimedia data excluding video data have much more frames for one frame of video data, so one frame of video data does not require only one frame of different multimedia. That is, in a mobile communication terminal, video data is transmitted at a speed of 8 fps (frame per second), while audio data is transmitted at a speed of 25-35 fps. Therefore, the media delay output controller 608 delays the time at which video data is buffered by a pre-defined number of frames, receives information indicating that the source data buffer 606 is full from the video controller 603, and outputs control data and multimedia data excluding video data from video source data corresponding to time information of video frames to be output from a buffer.

The MPEG4 ACC decoder 610, the EVRC decoder 611, and the MIDI decoder 612 decodes and outputs multimedia data (that is, audio data) excluding video data in which the multimedia data is provided from the media delay output controller 608. The video data output section 609 receives a control signal from the media delay output controller 608, reads video frames from the source data buffer 606, and outputs the read video frames.

The video synchronizing section 613 and the audio synchronizing section 614 synchronizes and outputs video information output from the video data output section 609 and audio information output from the MPEG4 ACC decoder 610, the EVRC decoder 611, and the MIDI decoder 612, according to time synchronizing information input from the media delay output controller 608.

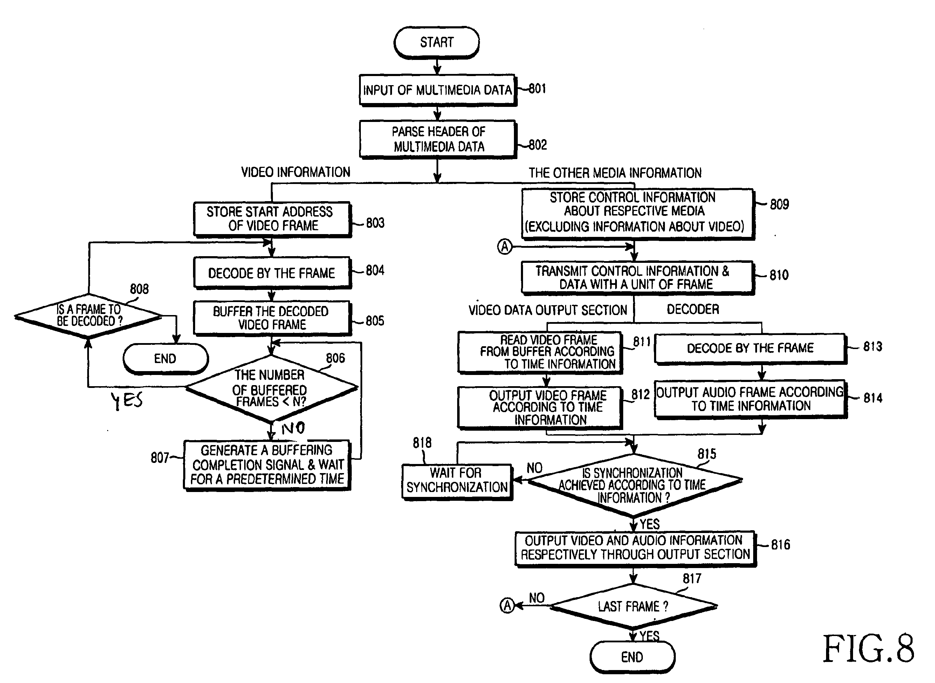

FIG. 8 is a flowchart illustrating reproduction of multimedia data in a mobile communication terminal according to an embodiment of the present invention. Referring to FIG. 8, first, multimedia data is input into a multimedia reproduction apparatus of a mobile communication terminal according to the present invention (step 801). In an embodiment of the present invention, while a case in which the input multimedia data is a K3G type is described, the present invention is identically applicable to other multimedia reproduction methods of decoding multimedia data of other formats, such as 3GPP, 3GPP2, and so forth.

Next, the header of the input multimedia data is parsed (step 802), so as to divide the data into video information and other multimedia information excluding the video information. Herein, with regard to video information, the start address of video frames is stored (step 803), and stored video frames are decoded according to frames (step 804).

Subsequently, the decoded video frames are buffered (step 805). Then, if the number of the buffered frames is not fewer than the number n of frames defined in advance for buffering (step 806), a buffering completion signal is generated and a waiting state is undergone for a predetermined time (that is, for a waiting time for outputting the buffered frames) (step 807), and step 806 is again performed after the predetermined time has passed. However, if the number of the buffered frames is fewer than the number N of frames pre-defined for buffering (step 806), whether or not there s another frame for buffering is determined in step 808. Then, if there is any other frame for buffering, step 804 is performed, and if there is no frame for buffering, the process is ended.

The pre-defined number N of frames for buffering is determined using the following factors during a process for parsing the headers of input video stream. First, the larger the size of encoded frames is, the larger the determined number N is, which can be judged as an actual size of data between the headers of frames. Number N can be increased according to the use of techniques, such as estimation of direct current (DC) and alternate current (AC), 4-motion vector (4MV) mode, unrestricted MV, and so forth, requiring a large number of calculations that greatly increases a compression ratio of an image. Also, number N can be increased when error resilient techniques, such as Resync marker, data partitioning, and so forth, in consideration of the use in wireless environment in which a lot of errors are generated in a video CODEC. From a number of experiments, it is determined that the factors may functions to increase number N by 0.5 per factor.

With the other media information excluding video information, control information about respective media is stored (step 809), control information and data by the frame are transmitted to the decoders 610 to 612 and the video data output section 609 (step 810).

Next, the decoders 610 to 612 decode audio data by the frame (step 813), and output audio frames according to time information (step 814). Also, the video data output section 609 reads video frames according to time information from a buffer (step 811), and outputs the read video frames according to the time information (step 812).

Subsequently, it is determined whether the outputs of the video frames and audio frames performed in steps 812 and 814 are synchronized with each other according to the time information (step 815). If synchronized, the video information and the audio information are output into each output section (for example, a display section 106 and a voice processing section 104) (step 816), and this process is repeated to the last frame (step 817).

However, when it is determined that the outputs of the video frames and audio frames performed in steps 812 and 814 are not synchronized with each other according to the time information (step 815), the video frames or the audio frames must wait for synchronization (step 818), and then the video frames or the audio frames are synchronized with each other and output (steps 816 and 817).

According to the present invention described above, when a multimedia data of a mobile communication terminal is reproduced, output data is buffered, so that limited resources of a mobile communication terminal can be efficiently used. Also, the present invention has an effect of supporting quality of service while multimedia data for a mobile communication terminal are provided using little resources.

The method described above according to the present invention can be realized as a program and stored a recoding medium (a CD ROM, a RAM, a floppy disk, a hard disk, a magneto-optical disk, and so forth) as a format capable of reading by a computer.

While the present invention has been shown and described with reference to certain preferred embodiments thereof, it will be understood by those skilled in the art that various changes in form and details may be made therein without departing from the scope of the invention as defined by the appended claims. Accordingly, the scope of the present invention is not to be limited by the above embodiments but by the claims.

## Claims

1. A multimedia reproduction apparatus using output buffering in a mobile communication terminal, the apparatus comprising:
a data parsing section (602, 607) for dividing multimedia data (601) into video data and other data and then performing a parsing process on the video data and the other data;
a video data processing section (603 to 606) for decoding video frames of the parsed video data, which is transmitted from the data parsing section (602), and for buffering a predetermined number of video frames of the decoded data wherein said number of video frames to be buffered is determined during a process for parsing the headers of input video stream, and where said number of video frames to be buffered is determined to be larger when the size of the encoded video frames is larger;
a media delay output controller (608) for delaying audio data parsed by and transmitted from the data parsing section (607) according to buffering information of the video data processing section (603 to 606), for outputting the delayed data, and for generating a synchronizing signal;
an audio data processing section (610 to 612) for decoding and outputting audio frames from among the other data output from the media delay output controller (608);
a video data output section (609) for reading and outputting the video frames buffered by the video data processing section (603 to 606), using control data from among the other data output from the media delay output controller (608); and
a synchronizing section (613, 614) for synchronizing and outputting the video data output from the video data output section (609) and the audio data output from the audio data processing section (610, 612) according to a synchronizing signal of the media delay output controller (608).

2. The multimedia reproduction apparatus as claimed in claim 1, wherein the video data processing section (603 to 606) comprises:
a video controller (603) for outputting the parsed video data received from the data parsing section (602) by the frame;
a video decoder (604, 605) decoding the video data received by the frame through the video controller (603), by the frame; and
a buffer (606) for buffering the predetermined number of video frames of the decoded video data, and transmitting a buffering completion signal to the video controller (603) when the predetermined number of video frames have been buffered, the video controller (603) transmitting buffering information to the media delay output controller (608) according to the buffering completion signal received from the buffer (606).

3. The multimedia reproduction apparatus as claimed in claim 1 or 2, wherein the synchronizing signal of the media delay output controller (608) is time information.

4. The multimedia reproduction apparatus as claimed in one of claims 1 to 3, wherein the predetermined number of video frames are buffered, so that the video data is output by an average decoding time of the predetermined and buffered number of video frames.

5. The multimedia reproduction apparatus as claimed in one of claims 1 to 4, wherein the multimedia data is data of a Korea 3 Generation type.

6. The multimedia reproduction apparatus as claimed in one of claims 1 to 4, wherein the multimedia data is data of a third Generation Partnership Project type.

7. The multimedia reproduction apparatus as claimed in one of claims 1 to 4, wherein the multimedia data is data of a third Generation Partnership Project 2 type.

8. The multimedia reproduction apparatus as claimed in one of claims 1 to 4, wherein the multimedia data is data of a Real-time Transport Protocol type.

9. A control method using output buffering to reproduce multimedia data in a mobile communication terminal, the control method comprising the steps of:
(1) receiving the multimedia data, dividing multimedia data into video data and other data, and parsing (802) the video data and the other data, respectively, in the mobile communication terminal;
(2) storing (803) video frame start addresses of the video data parsed in step (1), decoding (804), by a video data processing section, video frames, and buffering (805) a predetermined number of video frames, wherein said number of video frames to be buffered is determined during, a process for parsing the headers of input video stream, and where said number of video frames to be buffered is determined to be larger when the size of the encoded video frames is larger;
(3) outputting the other data parsed in step (1) after delaying, by a media delay output controller, the other data according to buffering information of the video data processing section;
(4) decoding (813) and outputting (814) by an audio deta processing section, audio frames in which the audio data is included in the data output in step (3), and the outputting (812) video frames buffered in step (2) using control data from among the other data output in step (3); and
(5) synchronizing (815, 818) and outputting (816), by a synchronizing section, the video frames and audio frames output in step (4) according to a synchronizing signal of the media delay output controller.

10. The control method as claimed in claim 9, further comprising a step (6) of generating (807) a buffering completion control signal when the predetermined number of video frames have been buffered in step (2), transmitting the buffering completion control signal, and controlling the delaying process of step (3) to be performed.

11. The control method as claimed in claim 9 or 10, wherein the predetermined number of video frames are buffered and output, so that the video frames are output by an average decoding time of the predetermined and buffered number of video frames.

12. The control method as claimed in one of claims 9 to 11, wherein, in step (5), when the time information of a video frame and an audio frame output in step (4) does not correspond to each other, a frame having prior time information waits for the other frame from among the video frame and the audio frame, thereby performing the synchronization.

## Patentansprüche

1. Multimedia-Wiedergabevorrichtung in einem Mobilkommunikations-Endgerät, die Ausgabe-Pufferung verwendet, wobei die Vorrichtung umfasst:
einen Abschnitt (602, 607) zum Parsen von Daten, mit dem Multimedia-Daten (601) in Video-Daten und andere Daten geteilt werden und dann ein Parsing-Vorgang an den Video-Daten und den anderen Daten durchgeführt wird;
einen Abschnitt (603 bis 606) zum Verarbeiten von Video-Daten, mit dem Video-Frames der Parsing unterzogenen Video-Daten, die von dem Abschnitt (602) zum Parsen von Daten übertragen werden, decodiert werden und eine vorgegebene Anzahl von Video-Frames der decodierten Daten gepuffert wird, wobei die zu puffernde Anzahl von Video-Frames während eines Prozesses zum Parsen der Header eines Eingangs-Video-Stroms bestimmt wird und die zu puffernde Anzahl von Video-Frames so bestimmt wird, dass sie größer ist, wenn die Größe der codierten Video-Frames größer ist;
einen Controller (608) für verzögerte Ausgabe von Medien, mit der durch den Abschnitt (607) zum Parsen von Daten Parsing unterzogene und übertragene Audio-Daten entsprechend Pufferungs-Informationen des Abschnitts (603 bis 606) zum Verarbeiten von Video-Daten verzögert werden, die verzögerten Daten ausgegeben werden und ein Synchronisierungs-Signal erzeugt wird;
einen Abschnitt (610 bis 612) zum Verarbeiten von Audio-Daten, mit dem von den anderen Daten, die von dem Controller (608) für verzögerte Ausgabe von Medien ausgegeben werden, Audio-Frames decodiert und ausgegeben werden;
einen Abschnitt (609) für Ausgabe von Video-Daten, mit dem die durch den Abschnitt (603 bis 606) zum Verarbeiten von Video-Daten gepufferten Video-Frames unter Verwendung von Steuerdaten von den anderen Daten, die von dem Controller (608) für verzögerte Ausgabe von Medien ausgegeben werden, gelesen und ausgegeben werden; und
einen Synchronisierabschnitt (613, 614), mit dem die von dem Abschnitt (609) für Ausgabe von Video-Daten ausgegebenen Video-Daten und die von dem Abschnitt (610, 612) zum Verarbeiten von Audio-Daten ausgegebenen Audio-Daten entsprechend einem Synchronisierungs-Signal des Controllers (608) für verzögerte Ausgabe von Medien synchronisiert und ausgegeben werden.

2. Multimedia-Wiedergabevorrichtung nach Anspruch 1, wobei der Abschnitt (603 bis 606) zum Verarbeiten von Video-Daten umfasst:
einen Video-Controller (603), mit dem die von dem Abschnitt (602) zum Parsen von Daten empfangenen, Parsing unterzogenen Video-Daten Frame für Frame ausgegeben werden;
eine Video-Decodiereinrichtung (604, 605), die die über den Video-Controller (603) Frame für Frame empfangenen Video-Daten Frame für Frame decodiert; und
einen Puffer (606), mit dem die vorgegebene Anzahl von Video-Frames der decodierten Video-Daten gepuffert wird und ein Pufferungsabschluss-Signal zu dem Video-Controller (603) gesendet wird, wenn die vorgegebene Anzahl von Video-Frames gepuffert worden ist, wobei der Video-Controller (603) entsprechend dem von dem Puffer (606) empfangenen Pufferungsabschluss-Signal Pufferungs-Informationen zu dem Controller (608) für verzögerte Ausgabe von Medien sendet.

3. Multimedia-Wiedergabevorrichtung nach Anspruch 1 oder 2, wobei das Synchronisierungs-Signal des Controllers (608) für verzögerte Ausgabe von Medien eine Zeit-Information ist.

4. Multimedia-Wiedergabevorrichtung nach einem der Ansprüche 1 bis 3, wobei die vorgegebene Anzahl von Video-Frames so gepuffert wird, dass die Video-Daten entsprechend einer durchschnittlichen Decodier-Zeit der vorgegebenen und gepufferten Anzahl von Video-Frames ausgegeben werden.

5. Multimedia-Wiedergabevorrichtung nach einem der Ansprüche 1 bis 4, wobei die Multimedia-Daten Daten eines Typs K3G (Korea 3 Generation) sind.

6. Multimedia-Wiedergabevorrichtung nach einem der Ansprüche 1 bis 4, wobei die Multimedia-Daten Daten eines Typs 3GPP (Third Generation Partnership Project) sind.

7. Multimedia-Wiedergabevorrichtung nach einem der Ansprüche 1 bis 4, wobei die Multimedia-Daten Daten eines Typs 3GPP2 (Third Generation Partnership Project 2) sind.

8. Multimedia-Wiedergabevorrichtung nach einem der Ansprüche 1 bis 4, wobei die Multimedia-Daten Daten eines Typs RTP (Real-time Transport Protocol) sind.

9. Steuerverfahren, bei dem Ausgabe-Pufferung verwendet wird, um Multimedia-Daten in einem Mobilkommunikations-Endgerät wiederzugeben, wobei das Steuerverfahren die folgenden Schritte umfasst:
(1) Empfangen der Multimedia-Daten, Teilen der Multimedia-Daten in Video-Daten und andere Daten und Parsen (802) der Video-Daten sowie der anderen Daten in dem Mobilkommunikations-Endgerät;
(2) Speichern (803) von Startadressen von Video-Frames der in Schritt (1) Parsing unterzogenen Video-Daten, Decodieren (804) von Video-Frames durch einen Abschnitt zum Verarbeiten von Video-Daten, und Puffern (805) einer vorgegebenen Anzahl von Video-Frames, wobei die zu puffernde Anzahl von Video-Frames während eines Prozesses zum Parsen der Header eines Eingangs-Video-Stroms bestimmt wird und die zu puffernde Anzahl von Video-Frames so bestimmt wird, dass sie größer ist, wenn die Größe der codierten Video-Frames größer ist;
(3) Ausgeben der in Schritt (1) Parsing unterzogenen anderen Daten durch einen Controller für verzögerte Ausgabe von Medien nach Verzögern der anderen Daten entsprechend Pufferungs-Informationen des Abschnitts zum Verarbeiten von Video-Daten;
(4) Decodieren (813) und Ausgeben (814) von Audio-Frames durch einen Abschnitt zum Verarbeiten von Audio-Daten, wobei die Audio-Daten in den in Schritt (3) ausgegebenen Daten enthalten sind, und Ausgeben (812) in Schritt (2) gepufferter Video-Frames unter Verwendung von Steuerdaten von den in Schritt (3) ausgegebenen anderen Daten; und
(5) Synchronisieren (815, 818) und Ausgeben (816) der in Schritt (4) ausgegebenen Video-Frames und Audio-Frames durch einen Synchronisierabschnitt entsprechend einem Synchronisierungs-Signal des Controllers für verzögerte Ausgabe von Medien.

10. Verfahren nach Anspruch 9, das des Weiteren einen Schritt (6) umfasst, in dem ein Pufferungsabschluss-Steuerungssignal erzeugt wird (807), wenn die vorgegebene Anzahl von Video-Frames in Schritt (2) gepuffert worden ist, das Pufferungsabschluss-Steuerungssignal gesendet wird und Durchführung des Verzögerungsprozesses von Schritt (3) gesteuert wird.

11. Steuerungsverfahren nach Anspruch 9 oder 10, wobei die vorgegebene Anzahl von Video-Frames so gepuffert wird, dass die Video-Daten entsprechend einer durchschnittlichen Decodier-Zeit der vorgegebenen und gepufferten Anzahl von Video-Frames ausgegeben werden.

12. Steuerungsverfahren nach einem der Ansprüche 9 bis 11, wobei in Schritt (5), wenn die Zeit-Informationen eines Video-Frame und eines Audio-Frame, die in Schritt (4) ausgegeben werden, einander nicht entsprechen, ein Frame mit einer früheren Zeit-Information auf den anderen Frame von dem Video-Frame und dem Audio-Frame wartet, um so die Synchronisation durchzuführen.

## Revendications

1. Appareil de reproduction multimédia utilisant un tampon de sortie dans un terminal de communication mobile, l'appareil comprenant :
une section de décomposition analytique de données (602, 607) pour diviser des données multimédia (601) en données vidéo et en d'autres données, puis pour mettre en oeuvre une procédure de décomposition analytique des données vidéo et des autres données ;
une section de traitement de données vidéo (603 à 606) pour décoder des trames vidéo des données vidéo décomposées analytiquement, qui sont transmises depuis la section de décomposition analytique de données (602), et pour stocker dans un tampon un nombre prédéterminé de trames vidéo des données décodées, dans lequel ledit nombre de trames vidéo à stocker dans un tampon est déterminé durant une procédure de décomposition analytique des en-têtes d'un flux vidéo d'entrée, et où ledit nombre de trames vidéo à stocker dans un tampon est déterminé pour être supérieur lorsque la taille des trames vidéo encodées est supérieure ;
un contrôleur de sortie de retard de média (608) pour retarder des données audio décomposées analytiquement par la section de décomposition analytique de données (607) et transmises par ladite section, en fonction de l'information de stockage tampon de la section de traitement de données vidéo (603 à 606), pour sortir les données retardées et pour générer un signal de synchronisation ;
une section de traitement de données audio (610 à 612) pour décoder et sortir des trames audio à partir des autres données sorties par le contrôleur de sortie de retard de média (608) ;
une section de sortie de données vidéo (609) pour lire et sortir les trames vidéo stockées dans un tampon par la section de traitement de données vidéo (603 à 606), en utilisant des données de contrôle provenant des autres données sorties par le contrôleur de sortie de retard de média (608) ; et
une section de synchronisation (613, 614) pour synchroniser et sortir la sortie de données vidéo provenant de la section de sortie de données vidéo (609) et les données audio sorties par la section de traitement de données audio (610, 612) en fonction d'un signal de synchronisation du contrôleur de sortie de retard de média (608).

2. Appareil de reproduction multimédia selon la revendication 1, dans lequel la section de traitement de données vidéo (603 à 606) comprend :
un contrôleur vidéo (603) pour sortir les données vidéo décomposées analytiquement reçues depuis la section de décomposition analytique de données (602) par la trame ;
un décodeur vidéo (604, 605) qui décode les données vidéo reçues par la trame via le contrôleur vidéo (603), par la trame ; et
un tampon (606) pour stocker dans un tampon le nombre prédéterminé de trames vidéo des données vidéo décodées, et pour transmettre un signal d'achèvement de stockage tampon au contrôleur vidéo (603) lorsque le nombre de trames vidéo stockées dans le tampon a atteint le nombre prédéterminé, le contrôleur vidéo (603) transmettant de l'information de stockage tampon au contrôleur de sortie de retard de média (608) en fonction du signal d'achèvement de stockage tampon reçu depuis le tampon de stockage (606).

3. Appareil de reproduction multimédia selon la revendication 1 ou 2, dans lequel le signal de synchronisation du contrôleur de sortie de retard de média (608) est une information temporelle.

4. Appareil de reproduction multimédia selon l'une des revendications 1 à 3, dans lequel le nombre de trames vidéo stockées dans un tampon a atteint le nombre prédéterminé, de telle manière que les données vidéo sont sorties selon un temps de décodage moyen du nombre prédéterminé de trames vidéos stockées en tampon.

5. Appareil de reproduction multimédia selon l'une des revendications 1 à 4, dans lequel les données multimédia sont des données de type K3G, soit Korea 3rd Generation.

6. Appareil de reproduction multimédia selon l'une des revendications 1 à 4, dans lequel les données multimédia sont des données de type 3GPP, soit 3rd Generation Partnership Project.

7. Appareil de reproduction multimédia selon l'une des revendications 1 à 4, dans lequel les données multimédia sont des données de type 3GPP2, soit 3rd Generation Partnership Project 2.

8. Appareil de reproduction multimédia selon l'une des revendications 1 à 4, dans lequel les données multimédia sont des données de type RTP, soit Real-time Transport Protocol.

9. Procédé de contrôle utilisant un stockage tampon de sortie pour reproduire des données multimédia dans un terminal de communication mobile, le procédé de contrôle comprenant les étapes consistant à :
(1) recevoir les données multimédia, diviser les données multimédia en données vidéo et en d'autres données, et effectuer une décomposition analytique (802) respectivement des données vidéo et des autres données dans le terminal de communication mobile ;
(2) stocker (803) des adresses de départ de trame vidéo des données vidéo décomposées analytiquement à l'étape (1), décoder (804), par une section de traitement de données vidéo, des trames vidéo, et stocker dans un tampon (805) un nombre prédéterminé de trames vidéo, dans lequel ledit nombre de trames vidéo à stocker dans un tampon est déterminé durant une procédure de décomposition analytique des en-têtes du flux vidéo d'entrée, et où ledit nombre de trames vidéo à stocker dans un tampon est déterminé pour être supérieur lorsque la taille des trames vidéo encodées est supérieure ;
(3) sortir les autres données décomposées analytiquement à l'étape (1) après avoir retardé les autres données, par un contrôleur de sortie de retard de média, en fonction de l'information de stockage tampon de la section de traitement de données vidéo ;
(4) décoder (813) et sortir (814), par une section de traitement de données audio, des trames audio dans lesquelles les données audio sont incluses dans les données sorties à l'étape (3), et sortir (812) des trames vidéo stockées dans un tampon à l'étape (2) en utilisant des données de contrôle parmi les autres données sorties à l'étape (3) ; et
(5) synchroniser (815, 818) et sortir (816), par une section de synchronisation, les trames vidéo et les trames audio sorties à l'étape (4) en fonction d'un signal de synchronisation du contrôleur de sortie de retard de média.

10. Procédé de contrôle selon la revendication 9, comprenant en outre une étape (6) consistant à générer (807) un signal de contrôle d'achèvement de stockage tampon lorsque le nombre de trames vidéo stockées dans le tampon à l'étape (2) a atteint le nombre prédéterminé, transmettre le signal de contrôle d'achèvement de stockage tampon, et contrôler la procédure de retard de l'étape (3) à mettre en oeuvre.

11. Procédé de contrôle selon la revendication 9 ou 10, dans lequel le nombre de trames vidéo stockées dans un tampon et sorties a atteint le nombre prédéterminé, de telle manière que les trames vidéo sont sorties selon un temps de décodage moyen du nombre prédéterminé de trames vidéos stockées en tampon.

12. Procédé de contrôle selon l'une des revendications 9 à 11, dans lequel, à l'étape (5), lorsque l'information temporelle d'une trame vidéo et l'information temporelle d'une trame audio sorties à l'étape (4) ne correspondent pas entre elles, une trame parmi la trame vidéo et la trame audio ayant une information temporelle antérieure attend l'autre desdites trames, moyennant quoi la synchronisation est effectuée.
